(19) **Europäisches Patentamt**

**European Patent Office**

**Office européen des brevets**

(11) Veröffentlichungsnummer: **0 216 227**
**B1**

# (12) EUROPÄISCHE PATENTSCHRIFT

(45) Veröffentlichungstag der Patentschrift:
**22.08.90**

(21) Anmeldenummer: **86112293.5**

(22) Anmeldetag: **05.09.86**

(51) Int. Cl.⁵: **B03C 3/38,** B03C 3/41,
B01D 53/32

(54) Elektrodeanordnung für Koronaentladungen.

(30) Priorität: **16.09.85 DE 3532978**

(43) Veröffentlichungstag der Anmeldung:
**01.04.87 Patentblatt 87/14**

(45) Bekanntmachung des Hinweises auf die Patenterteilung:
**22.08.90 Patentblatt 90/34**

(84) Benannte Vertragsstaaten:
**AT BE CH FR GB IT LI LU NL SE**

(56) Entgegenhaltungen:
**DE-C- 858 692**
**FR-A- 834 510**
**GB-A- 598 485**

(73) Patentinhaber: **Dr. Engelter & Nitsch,**
**Wirtschaftsberatung, An der Hauptwache 7,**
**D-6000 Frankfurt am Main 1(DE)**

(72) Erfinder: **Varga, Andras, Dr., Wasserturmstrasse 23,**
**D-6904 Eppelheim(DE)**

(74) Vertreter: **Meier, Robert, Dipl.-Ing., Patentanwalt**
**Dipl.-Ing. Robert Meier Auf dem Mühlberg 16,**
**D-6000 Frankfurt am Main 70(DE)**

## Beschreibung

Die Erfindung bezieht sich auf eine Elektrodenanordnung für Koronaentladungen, vorzugsweise zum Einsatz in Geräten zur Reinigung von Luft und anderen Gasen und/oder zur Raumklimatisierung, entsprechend dem ersten Teil des Anspruchs 1 (GB-A 598 485).

Seit mehreren Jahrzehnten sind Elektrofilter zur Reinigung industrieller Nutz- und Abgase bekannt. Hauptanwender derartiger Elektrofilter sind vor allem Kraftwerke und Müllverbrennungsanlagen, die Zementindustrie, Eisenhütten- und Stahlwerke, die chemische Industrie und die Nichteisenmetallurgie, aber auch die Zellstoffindustrie.

Im Laufe der Zeit haben genaue Kenntnisse der industriellen Produktionsprozesse die systematische Erforschung aller den Elektrofilterbetrieb beeinflussenden Parameter ermöglicht.

Durch Elektrofilter werden die im Gas suspendierten Staubteilchen elektrisch aufgeladen und unter dem Einfluß eines starken elektrischen Feldes zu den Niederschlagselektroden transportiert und dort abgeschieden. Die Niederschlagselektroden sind gemeinsam mit dem Filtergehäuse geerdet, die Sprühelektroden (dünne Drähte oder mit Spitzen versehene Bänder) sind negativ gepolt und werden von Isolatoren getragen.

Zwischen den Elektroden herrscht Gleichspannung, die je nach Filterbauart und Anwendungsfall 20 kV bis über 100 kV beträgt. In unmittelbarer Umgebung der Sprühelektroden kommt es infolge der hohen Feldstärke zu Koronaentladungen. Hierbei werden Elektronen frei, die entstehenden negativ geladenen Gasionen lagern sich den Staubteilchen an. Diese wandern unter dem Einfluß des elektrischen Feldes zur Niederschlagselektrode, wo sie ihre Ladung abgeben ("Reinigung industrieller Nutz- und Abgase", Lurgi Umwelt und Chemotechnik GmbH, Frankfurt am Main).

Obzwar Elektrofilter zur Reinigung industrieller Nutz- und Abgase seit über 6 Jahrzehnten bekannt sind, ist der Einsatz von Koronaentladungen in Geräten zur Reinigung von Luft und anderen Gasen und/oder zur Raumklimatisierung noch relativ neu.

Bekannt geworden ist unter anderem ein elektrostatisches Filter zur Reinigung der Atemluft in geschlossenen Räumen von Schwebestoffen aller Art, wie organischem oder anorganischem Staub, Rauchpartikeln und Molekülen chemischer Verbindungen mit einem passiven Plattenabscheider, einer Sprühelektrode, einem Gebläse und einem mechanischen Vorfilter. Bei einem derartigen Filter sind zwei miteinander verbundene L-förmige Profilteile aus einem dielektrischen Werkstück vorgesehen, deren Schenkel paarweise mit ihren freien Kanten durch Schweißen, Kleben oder Nieten o.dgl. fest verbunden sind und die beide zu einem Rahmen zusammengesetzt sind, eine an zwei diametral gegenüberliegenden Seiten offene Kassette bilden, die in das Aggregat-Gehäuse nach Art einer Schublade einschließbar ist. Der Rahmen ist dabei zum Zwecke einer Vergrößerung der elektrischen Kriechstrecken mit Schlitzen, Ausnehmungen, Bohrungen und dgl. versehen. Die positiv und negativ vorgespannten, unterschiedlich langen vom Rahmen gehaltenen Filterplatten und deren lösbare Befestigung sind durch endlos gestanzte, in Nuten sich selbst haltende Haltefedern vorgesehen, wobei ein Herausnehmen barer Ionisationsrahmen vorgesehen ist, der die Ionisationsdrähte und die diese spannenden Haltefedern trägt (DE-A 2 341 626).

Der Aufbau eines solchen elektrostatischen Filters ist sehr aufwendig, da eine Vielzahl zusammensteckbarer Aggregate und Anordnungen in einem Kunststoffgehäuse unterzubringen sind. Die zu reinigende Luft wird durch ein Gebläse durch das Filter transportiert.

Demgegenüber liegt der vorliegenden Erfindung die Aufgabe zugrunde, eine neuartige Elektrodenanordnung zum Einsatz in Geräten zur Reinigung von Luft und anderen Gasen, und/oder zur Raumklimatisierung zu schaffen, die infolge ihrer Elektrodenausbildung intensive Koronaentladungen hervorrufen und die sich zudem vor allem für den Einbau in Rohrleitungen und Kaminen eignen.

Es wurde gefunden, daß sich diese Aufgabe in einfacher Weise lösen läßt durch die Merkmale aus Anspruch 1, wonach unter Anderem durch eine an einen Pol einer Hochspannungsquelle angeschlossene Kreisringelektrode, aus der Koronaentladungselektroden herausragen, und eine an den anderen Pol der Gleichspannungsquelle angeschlossene Feldelektrode, die innerhalb der durch die Koronaentladungselektroden beeinflußbaren Bereiche angeordnet ist. Durch die Kreisringelektrode und die dazu konzentrisch zu ihrer Mittellinie und im Abstand dazu angeordnete Feldelektrode kann je nach Abstand und angelegter Spannung für jeden Anwendungsfall das optimale elektrische Feld erzeugt werden. Die erfindungsgemäß ausgebildeten Koronaentladungselektroden sorgen dafür, daß sich zwischen ihnen und der Feldelektrode besonders hohe Feldstärken ausbilden. Infolge dieser Konstruktion ist die Elektrodenanordnung imstande, nicht nur genügend Elektronen zur Erzeugung negativ geladener Gasionen freizusetzen, die sich den Staubteilchen anlagern, sondern es ist mit der Elektrodenanordnung darüber hinaus möglich, gezielt gasförmige Schadstoffe, Gase sowie Aerosole zu ionisieren und an der Feldelektrode zum Niederschlag zu bringen.

Um vor allem das die Koronaentladung bewirkende Feld optimal ausbilden zu können, besitzt die Feldelektrode einen wulstförmigen Rand, der im Abstand den freien Enden der Koronaentladungselektroden gegenüberliegt.

In einem Ausführungsbeispiel sind die Koronaentladungselektroden gemäß der Ansprüche 5 und 6 an der Kreisringelektrode angeordnet.

In einem anderen Ausführungsbeispiel wird mit Vorteil eine Elektrodenanordnung nach den Ansprüchen 7–11 eingesetzt.

Die Elektrodenanordnung kann auf kleinstem Raum nach Maßgabe der Ansprüche 12 und 13 eingesetzt werden. Man ist im Einsatz der Elektrodenanordnung variabel hinsichtlich der Spannung des Elektrodenabstandes und der Durchmesser der Kreisringelektrode und der Feldelektrode. Unter Umständen kann es bei richtiger Bemessung genügen, eine Elektrodenanordnung für einen normalen Wohnraum vorzusehen.

Die Grundkonstruktion der Elektrodenanordnung ist bestens dafür geeignet, mehrere Grundelemente zusammenzusetzen. Hierbei werden mehrere Kreisringelektroden und Feldelektroden hintereinander auf je einer Isolierhalterung befestigt und jeweils durch leitende Verbindungen miteinander an gleiche Spannung gelegt. Die Grundkonzeption, aber auch die so zusammengesetzte Mehrfachanordnung ist ideal dafür geeignet, in Rohrleitungen zum Einsatz zu kommen. Mehrere Rohrleitungen können im Bedarfsfall parallel zueinander zum Einsatz kommen.

Die Zusammenfassung mehrerer Grundelektrodenanordnungen zu einer größeren Einheit erfolgt nach Maßgabe der Ansprüche 17–20.

Wenn die Feldelektroden nach Maßgabe der Ansprüche 22–24 ausgebildet werden, ist es möglich, auf einfache Weise gezielt Gase oder gasförmige Schadstoffe aus einem Gasstrom abzusondern. Die an den Feldelektroden sich absetzenden Gasionen werden durch die Evakuierungseinrichtung in das Innere der Elektroden und von dort aus, beispielsweise durch einen Katalysator, abgesaugt.

Die Koronaentladungselektroden können je nach Einsatzfall jede beliebige bekannte Formgestaltung erhalten. In einem bevorzugten Ausführungsbeispiel sind sie als Ionisationenadeln ausgebildet.

Ausführungsbeispiele der Erfindung werden nachfolgend anhand der Zeichnung erläutert.

Es zeigt:

Fig. 1 ein erstes Ausführungsbeispiel im Querschnitt,

Fig. 2 zwei konstruktive Abwandlungen der Elektroden,

Fig. 3 ein weiteres Ausführungsbeispiel der Erfindung,

Fig. 4 zwei Ausführungsbeispiele mit radial angeordneten Koronaentladungselektroden,

Fig. 5 zwei weitere Ausführungsbeispiele mit radial angeordneten Koronaentladungselektroden,

Fig. 6 einen Querschnitt entlang der Linie VI, VI durch eine Anordnung gemäß Fig. 7 und

Fig. 7 einen Querschnitt durch die Anordnung gemäß Fig. 6 entlang der Linie VII, VII.

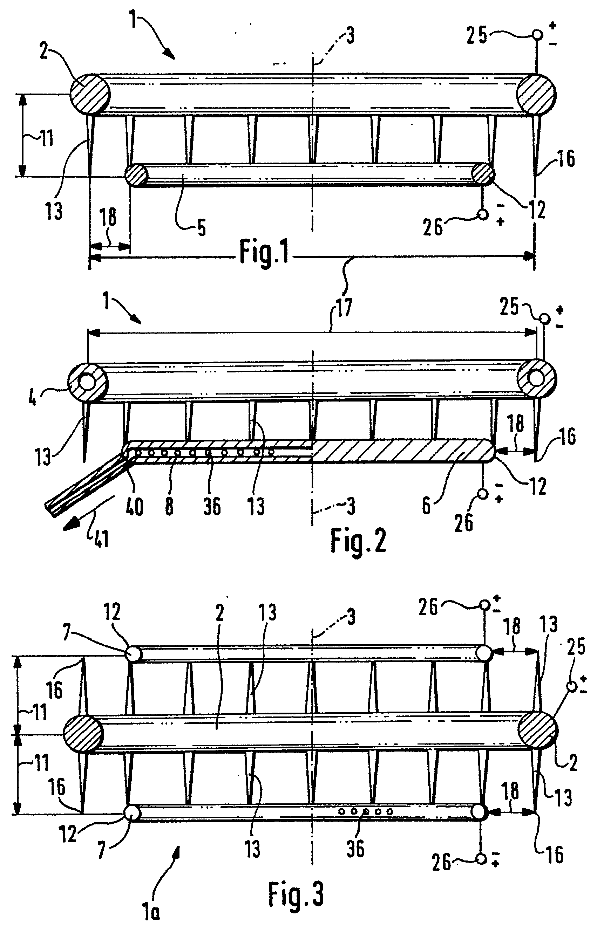

Fig. 1 zeigt im Querschnitt eine erfindungsgemäße Elektrodenanordnung. An den einen Pol 25 einer nicht dargestellten Hochspannungsquelle ist eine im Querschnitt gezeichnete Kreisringelektrode 2 angeschlossen, die rotationssymetrisch um eine Mittellinie 3 ausgebildet ist. Die Kreisringelektrode 2 kann als massiver Metallring, beispielsweise aus Kupfer, aber auch als massiver Kunststoffring mit metallischem Überzug ausgebildet sein.

Aus der Kreisringelektrode 2 der Elektrodenanordnung 1 ragen gleichlaufend zur Mittellinie 3 Koronaentladungselektroden 13 heraus, deren freie Enden 16 im dargestellten Ausführungsbeispiel als Spitzen ausgebildet sind. Die Koronaentladungselektroden 13 können jede beliebige Gestalt annehmen. Sie können Kugelköpfe oder anders figurierte Kopfbereiche aufweisen. In Fig. 1 sind sie als Ionisationsnadeln ausgebildet.

An einem anderen Pol 26 einer Hochspannungsquelle ist eine als Kreisring ausgebildete Feldelektrode 5 angeschlossen. Sie liegt innerhalb des durch die Koronaentladungselektroden 13 beeinflußbaren Bereiches 17.

Die Kreisringelektrode 2 und die Feldelektrode 5 sind beide konzentrisch zur gemeinsamen Mittellinie 3 sowie im Abstand 11 zueinander angeordnet. In der praktischen Ausführung einer Elektrodenanordnung nach der Erfindung können Mittel vorgesehen sein, den Abstand 11 zwischen der Kreisringelektrode 2 und der Feldelektrode 5 zu variieren. Diese Variationsmöglichkeit gilt im Prinzip auch für die nachfolgend noch erläuterten Ausführungsbeispiele der Erfindung.

Wesentlich ist, daß die Feldelektrode 5 sowie alle Feldelektroden nach der Erfindung einen wulstförmigen Rand 12 aufweisen.

Ohne Schwierigkeiten ist erkennbar, daß sich infolge der angelegten Gleichspannung zwischen den Polen 25 und 26 ein Feld zwischen der Ringelektrode 2 und der Feldelektrode 5 aufbildet. Die am Potential der Ringelektrode 2 anliegenden Koronaentladungselektroden 13 wirken als Sprühelektroden und entwickeln um ihre Spitzen herum beträchtliche Feldstärken, welche die Koronaentladungen hervorrufen. Durch diese Koronaentladungen in Verbindung mit der zwischen der Ringelektrode 2 und der Feldelektrode 5 bestehenden elektrischen Feldes wandern aufgeladene Staubpartikel, aber auch Aerosole bzw. Gase zur Feldelektrode 5 und setzen sich dort ab.

In besonderen Fällen, die sich durch den Abstand 11, aber auch durch den Abstand 18 zwischen dem wulstförmigen Rand 12 und den freien Enden 16 der Koronaentladungselektroden 13 einstellen lassen, können auch Gasionen erzeugt werden, die zur Feldelektrode 5 wandern und sich dort absetzen. Eine Möglichkeit zum Abführen diese Gasionen von der Feldelektrode 5 wird weiter unten erklärt.

Fig. 2 läßt erkennen, daß der wulstförmige Rand 12 der Feldelektrode 5 im Abstand 18 den freien Enden 16 der Koronaentladungselektroden 13 gegenüberliegt. Deutlich ist auch erkennbar, daß die Feldelektrode 5 innerhalb des durch die Koronaentladungselektroden 13 beeinflußbaren Bereiches 17 angeordnet sind.

Fig. 2 zeigt eine als Rohr ausgebildete Kreisringelektrode 4, an der die Koronaentladungselektroden 13 angeordnet sind.

Auf der rechten Seite der Fig. 2 ist eine als Kreisplatte ausgebildete Feldelektrode 6 erkennbar, wohingegen auf der linken Seite eine als Dose 8 ausgebildete Feldelektrode dargestellt ist. Die Wandung dieser Dose weist Öffnungen 36 auf. Zudem ist die Dose 8 über eine Saugöffnung 40 an eine nicht dargestellte Evakuierungseinrichtung angeschlossen, die in Richtung des Pfeiles 41 einen Unterdruck erzeugt. Hierdurch ist es möglich, Gasionen, die sich auf der Oberfläche der dosenförmigen Feldelektrode 8 angeordnet und abgeschieden haben, abzusaugen.

Fig. 3 zeigt ein Ausführungsbeispiel einer Elektrodenanordnung, bei der die Koronaentladungselektroden 13 nicht allein gleichlaufend zur Kreisringelektrode 2 und die Feldelektrode 5 durchsetzenden Mittellinie 3, sondern darüber hinaus auch beiderseits der Ringelektrode 2 angeordnet sind. Im in Fig. 3 dargestellten Ausführungsbeispiel sind beide Feldelektroden 7 als Rohr ausgebildet. Die Rohre 7 können ihrerseits mit Öffnungen 36 bzw. mit einer Perforierung bzw. mit Saugdüsen besetzt und zudem über eine Saugöffnung 40, die nicht dargestellt ist, an eine Evakuierungseinrichtung angeschlossen sein.

Auch im Ausführungsbeispiel nach Fig. 3 liegen die Feldelektroden 7 den freien Enden 16 der Koronaentladungselektroden 13 gegenüber. Gemäß dieser Elektrodenanordnung 1a gemäß Fig. 3 kann ein wesentlich höherer Wirkungsgrad erzielt werden als mit einer Elektrodenanordnung nach Fig. 1. Sowohl die Elektrodenanordnung 1 nach Fig. 1 wie auch 1a nach Fig. 3 setzen einem Gasstrom praktisch einen sehr kleinen Störungswiderstand entgegen.

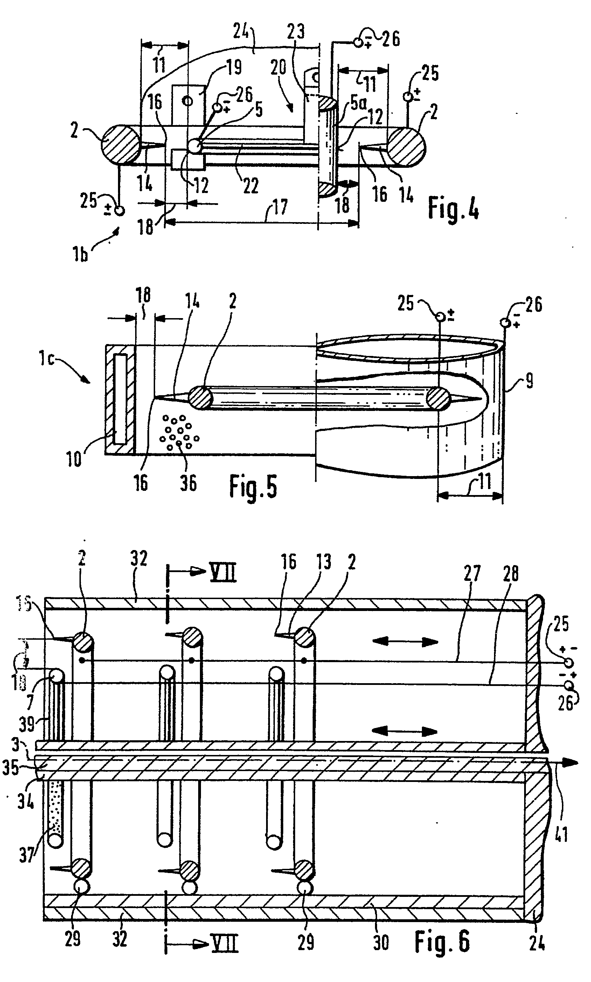

In den Ausführungsbeispielen der Elektrodenanordnungen 1b gemäß Fig. 4 und 1c gemäß Fig. 5 sind die Koronaentladungselektroden 14 radial angeordnet.

In einer Elektrodenanordnung 1b gemäß Fig. 4 (links) ist die Kreisringelektrode 2 außen und die als Kreisring ausgebildete Feldelektrode 5 innen angeordnet. Die Koronaentladungselektroden 14 sind radial nach innen auf den wulstförmigen Rand 12 der Feldelektrode 5 gerichtet. Der durch die äußeren Enden 16 der Koronaentladungselekreoden 14 vorgegebene Bereich 17 wird nicht ganz durch die Feldelektrode 5 ausgefüllt. Zwischen den freien Enden 16 der Koronaentladungselektroden 14 ist ein Abstand 18 vorgesehen. Der Abstand zwischen der Feldelektrode 5 und der Kreisringelektrode 12 ist mit 11 angegeben.

In Fig. 4 ist auch eine mögliche Anbringungsart der Elektrodenanordnung dargestellt. Die Kreisringelektrode 2 ist mittels einer Halterung 19 an einer Wand bzw. einem Gestell 24 befestigt. In diesem Fall ist entweder die Wand bzw. das Gestell 24 ein Isolator oder die Halterungen 19.

Die kreisringförmige Feldelektrode 5 ist mittels einer konzentrischen Halterung 20 an der Wand bzw. am Gestell 24 befestigt. Diese konzentrische Halterung 20 besteht aus Speichen 22, die vom Kreisring 5 radial nach innen weisen und innen an einem Winkelhaken 23 befestigt sind, durch den auch die konzentrische Anordnung der Feldelektrode 5 innerhalb der Kreisringelektrode 2 gewährleistet ist. Gemäß Fig. 4 (rechts) kann die Feldelektrode auch als Stab 5a ausgebildet sein.

Im Ausführungsbeispiel einer Elektrodenanordnung 1c gemäß Fig. 5 liegt die Kreisringelektrode 2 mit den radial nach außen weisenden Koronaentladungselektroden 14 innerhalb einer als Zylindermantel bzw. Zylinder ausgebildeten Feldringelektrode 9 bzw. 10. Die rechts im Schnitt dargestellte Zylindermantelelektrode 9 besteht aus massivem Material bzw. aus einem Kunststoffring, der mit Metall überzogen ist.

Auf der linken Seite der Fig. 5 ist eine als Hohlzylindermantel ausgebildete Feldelektrode 10 dargestellt. Im Mantel dieser Feldelektrode 10 können Öffnungen bzw. Perforierungen vorgesehen sein und eine in Fig. 5 nicht dargestellte Evakuierungs- bzw Saugöffnung 40, so daß auch mit einer Feldelektrode 10 niedergeschlagene Gasionen abgesaugt werden können.

Auch im Ausführungsbeispiel 1c ist ein Abstand 18 zwischen den freien Enden 16 der Koronaentladungselektroden 14 und dem Innenmantel der Feldelektrode 10 und ein Abstand 11 zwischen den beiden Elektroden 2 und 9 bzw. 10 eingehalten.

In bevorzugten Ausführungsbeispielen sind die Kreisringelektroden 2, 4 sowie die Feldelektroden 5–10 lösbar an ihren Halterungen 19 bzw. 20 befestigt.

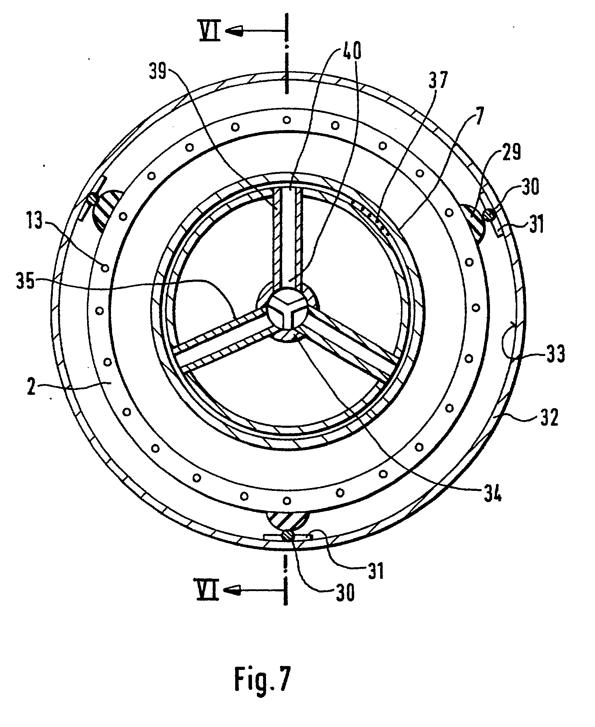

Ein weiteres Ausführungsbeispiel einer Elektrodenanordnung 1d wird nachfolgend anhand der Fig. 6 und 7 erläutert. Hierbei sind mehrere Kreisringelektroden 2, 4 bzw. Feldelektroden 5 bis 8 hintereinander auf je einer Isolierhalterung befestigt und jeweils durch leitende Verbindungen miteinander an gleiche Spannungen gelegt.

Die Fig. 6 und 7 lassen erkennen, daß mehrere Kreisringelektroden 2 bzw. 4 über Isolatoren 29 mit gleichlaufend zur Mittellinie 3 ausgerichteten Streben 30 verbunden sind. Diese Streben 30 liegen im dargestellten Ausführungsbeispiel 120° voneinander entfernt. Die Streben 30 können in Richtung der Mittellinie 3 in Schienen 31 verschoben werden, die an der Innenseite 33 eines Rohres 32 befestigt sind. Alle über die Isolatoren 29 mit den Streben 30 verbundenen Kreisringelektroden 2 bzw. 4 sind über eine leitende Verbindung 27 mit dem einen Pol 25 einer Hochspannungsquelle verbunden.

Es ist leicht erkennbar, daß alle mit den Streben miteinander verbundenen Kreisringelektroden aus dem Rohr 32 herausgezogen und auch wieder in das Rohr hineingeschoben werden können.

Die als Rohre ausgebildeten Feldringelektroden 7, die mit einer Perforierung 37 versehen sind, stehen über hohle Speichen 39 mit einem Tragrohr 34 in Verbindung. Diese Tragrohr 34 ist auf einen Träger 35 in Richtung der Mittellinie 3 verschiebbar. Der Träger 35 ist im dargestellten Ausführungsbeispiel mit sternförmigem Querschnitt dargestellt. Die hohlen Speichen 39 sind einerseits über eine Saugöffnung 40 an die als Rohr ausgebildete Feldringelektrode 7 und andererseits, ebenfalls über eine Saugöffnung 40 an das Tragrohr 34 angeschlossen, welches seinerseits, wie die Fig. 6 erkennen läßt, an eine Evakuierungsanordnung, die nicht dargestellt ist, anschließbar ist. Mit Hilfe dieser Evakuierungseinrichtung wird eine Saugrichtung gemäß Pfeil 41 erzielt, so daß - wie bereits beschrieben - an der Oberfläche der Feldelektrode 7 niedergeschlagene Gase abgesaugt werden können. Die Feldringelektroden 7 sind über eine leitende Verbindung 28 an den Pol 26 der Hochspannungsquelle angeschlossen.

In allen Ausführungsbeispielen nach der Erfindung bestehen die Koronaentladungselektroden 13, 14 und die Feldelektroden 5, 5a, 6, 7, 8, 9, 10 bzw. deren Oberflächen aus korrosionbeständigem Material.

Durch die besondere, vor allem ringförmige bzw. zylinder- oder stabförmige Ausbildung der Elektroden ergibt sich in allen Anwendungsfällen ein extrem kleiner Strömungswiderstand.

Liste der verwendeten Bezeichnungen

   1 Elektrodenanordnung (Fig. 1 und 2)
   1a Elektrodenanordnung (Fig. 3)
   1b Elektrodenanordnung (Fig. 4)
   1c Elektrodenanordnung (Fig. 5)
   1d Elektrodenanordnung (Fig. 6, 7)
   2 Kreisringelektrode
   3 Mittellinie
   4 Kreisringelektrode als Rohr
   5 Feldelektrode (Kreisring)
   5a Feldelektrode (Stab)
   6 Feldelektrode (Kreisplatte)
   7 Feldelektrode (Rohr)
   8 Feldelektrode (Dose)
   9 Feldelektrode (Zylindermantel)
   10 Feldelektrode (Hohlzylindermantel)
   11 Abstand der Elektroden
   12 wulstförmiger Rand
   13 Koronaentladungselektrode (gleichlaufend zur Mittellinie
   14 Koronaentladungselektrode (radial)
   15
   16 freies Ende
   17 von den Koronaentladungselektroden beeinflußbarer Bereich
   18 Abstand (wulstförmiger Rand, freie Enden der Koronaentladungselektroden
   19 Halterung (Ringelektrode)
   20 konzentrische Halterung (Feldelektrode)
   21
   22 Speiche
   23 Winkelhaken
   24 Wand, Gestell
   25 Pol einer Gleichspannungsquelle
   26 Pol einer Gleichspannungsquelle
   27 leitende Verbindung
   28 leitende Verbindung
   29 Isolator
   30 Strebe
   31 Schiene
   32 Rohr
   33 Innenseite
   34 Tragrohr
   35 Träger
   36 Öffnung
   37 Perforierung
   38 Saugöffnung
   39 hohle Speiche
   40 Saugöffnung
   41 Evakuierungsrichtung

**Patentansprüche**

1. Elektrodenanordnung für Koronaentladungen, vorzugsweise zum Einsatz in Geräten zur Reinigung von Luft und anderen Gasen und/oder zur Raumklimatisierung mit einer an einen Pol einer Hochspannungsquelle angeschlossenen Kreisringelektrode, aus der Koronaentladungselektroden herausragen, gekennzeichnet durch eine an den anderen Pol (26) der Gleichspannungsquelle angeschlossene, ebenfalls kreisringförmige Feldelektrode (5, 6, 7, 8, 9, 10), die so konzentrisch zu den Koronaentladungselektroden (13, 14) angeordnet ist, daß sich die Feldlinien symmetrisch zu Radiallinien zwischen den Spitzen der Koronaentladungselektroden (13, 14) und der Mittellinie (3) der Feldelektroden (5, 6, 7, 8, 9, 10) ausbilden.

2. Elektrodenanordnung nach Anspruch 1, dadurch gekennzeichnet, daß die Kreisringelektrode (2, 4) und die Feldelektrode (5 bis 10) konzentrisch zu ihrer Mittellinie (3) und im Abstand (11) zueinander angeordnet sind.

3. Elektrodenanordnung nach den Ansprüchen 1 und 2, dadurch gekennzeichnet, daß die Feldelektrode (5 bis 10) einen wulstförmigen Rand (12) aufweist.

4. Elektrodenanordnung nach den Ansprüchen 1–3, dadurch gekennzeichnet, daß der wulstförmige Rand (12) der Feldelektrode (5) bis 10) im Abstand (18) den freien Enden (16) der Koronaentladungselektroden (13, 14) gegenüberliegt.

5. Elektrodenanordnung nach den Ansprüchen 1–4, dadurch gekennzeichnet, daß die Koronaentladungselektroden (13) gleichlaufend zur Mittellinie (3) der Kreisringelektrode (2, 4) und der Feldelektrode (5 bis 8) angeordnet sind.

6. Elektrodenanordnung nach den Ansprüchen 1–5, dadurch gekennzeichnet, daß die Koronaentladungselektroden (13) beiderseits der Kreisringelektrode (2, 4) angeordnet sind.

7. Elektrodenanordnung nach den Ansprüchen 1–4, dadurch gekennzeichnet, daß die Koronaentladungselektroden (14) radial an der Kreisringelektrode (2, 4) angeordnet sind.

8. Elektrodenanordnung nach Anspruch 7, dadurch gekennzeichnet, daß die an der Kreisringelektrode (2, 4) sitzenden Koronaentladungselektroden (14) nach innen gerichtet sind.

9. Elektrodenanordnung nach den Ansprüchen 1–8, dadurch gekennzeichnet, daß die Feldelektrode (5) als Kreisring ausgebildet ist.

10. Elektrodenanordnung nach den Ansprüchen 1–8, dadurch gekennzeichnet, daß die Feldelektrode (5) als Kreisplatte ausgebildet ist.

11. Elektrodenanordnung nach den Ansprüchen 1–7, dadurch gekennzeichnet, daß die an der Kreisringelektrode (2, 4) sitzenden Koronaentladungselektroden (14) nach außen gerichtet sind und die Feldelektrode als im Abstand (18) von den freien Enden (16) der Koronaentladungselektroden (14) angeordneter Zylinder bzw. Zylindermantel (9, 10) ausgebildet ist.

12. Elektrodenanordnung nach den Ansprüchen 1–11, dadurch gekennzeichnet, daß die Kreisringelektrode (2, 4) mittels Halterungen (19) an einem Gestell bzw. an einer Wand (24) befestigt ist.

13. Elektrodenanordnung nach den Ansprüchen 1–12, dadurch gekennzeichnet, daß die Feldelektrode (5 bis 10) an einer konzentrischen Halterung (20) befestigt ist.

14. Elektrodenanordnung nach den Ansprüchen 1–13, dadurch gekennzeichnet, daß die Kreisringelektroden (2, 4) und die Feldelektroden (5 bis 10) lösbar mit ihren Halterungen (19, 20) verbunden sind.

15. Elektrodenanordnung nach den Ansprüchen 12–14, dadurch gekennzeichnet, daß die Halterungen Isolierhalterungen sind.

16. Elektrodenanordnung nach den Ansprüchen 1–15, dadurch gekennzeichnet, daß mehrere Kreisringelektroden (2, 4) und Feldelektroden (2 bis 8) hintereinander auf je einer Isolierhalterung (29, 30, 31, 32; 34, 35) befestigt sind und jeweils durch leitende Verbindungen (27, 28) miteinander an gleicher Spannung liegen.

17. Elektrodenanordnung nach Anspruch 16, dadurch gekennzeichnet, daß die Halterung für mehrere Kreisringelektroden (2, 4) mit diesen über Isolatoren (29) verbundene, gleichlaufend zur Mittellinie (3) ausgerichtete Streben (30) und entsprechend ausgebildete Schienen (32) einschließt, entlang derer die Streben (30) in Richtung der Mittellinie (3) verschiebbar sind.

18. Elektrodenanordnung nach Anspruch 17, dadurch gekennzeichnet, daß die Schienen (31) an der Innenseite (33) eines Rohres (32) sitzen.

19. Elektrodenanordnung nach den Ansprüchen 1–18, dadurch gekennzeichnet, daß mehrere Feldelektroden (5 bis 8) mittels ihrer konzentrischen Halterung (34, 39) hintereinander auf einem Tragrohr (34) befestigt sind, welches in Richtung der Mittellinie (3) verschiebbar auf einem Träger (35) sitzt.

20. Elektrodenanordnung nach Anspruch 19, dadurch gekennzeichnet, daß der Träger (35) sternförmigen Querschnitt aufweist.

21. Elektrodenanordnung nach den Ansprüchen 1–20, dadurch gekennzeichnet, daß die Kreisringelektrode (4) als Rohr ausgebildet ist.

22. Elektrodenanordnung nach den Ansprüchen 1–21, dadurch gekennzeichnet, daß die Feldelektrode als Rohr (7), als Dose (8), als Hohlzylinder (10) bzw. als Stab (5a) ausgebildet ist.

23. Elektrodenanordnung nach Anspruch 22, dadurch gekennzeichnet, daß die Wandung der Feldelektrode (7, 8, 10) eine Perforierung (37) aufweist bzw. mit Öffnungen (36) oder mit Saugdüsen (38) versehen ist, und die Feldelektrode an eine Evakuierungseinrichtung anschließbar ist.

24. Elektrodenanordnung nach Anspruch 23, dadurch gekennzeichnet, daß die radiale Halterung für die Feldelektroden (7, 8) Hohlspeichen (39) einschließt, die mit je einer entsprechenden Saugöffnung (40) in der Feldelektrode (7, 8) und dem Tragrohr (34) verbunden sind, welches seinerseits an die Evakuierungseinrichtung anschließbar ist.

25. Elektrodenanordnung nach den Ansprüchen 1–24, dadurch gekennzeichnet, daß die Koronaentladungselektroden (13, 14) als Ionisationsnadeln ausgebildet sind.

**Claims**

1. An electrode arrangement for corona discharges, preferably for use in apparatus for purification of air and other gases and/or for air-conditioning, comprising a circular annulus electrode connected to one pole of a high voltage source, said circular annulus electrode having corona discharge electrodes extending therefrom, characterized by an equally circular ring-shaped field electrode (5, 6, 7, 8, 9, 10) connected to the other pole (26) of said DC voltage source, said field electrode being arranged so concentrically to the corona discharge electrodes (13, 14) that the field lines are formed symmetrically to radial lines between the peaks of the corona discharge electrodes (13, 14) and the center line (3) of said field electrodes (5, 6, 7, 8, 9, 10).

2. An electrode arrangement according to claim 1, characterized in that the circular annulus electrode (2, 4) and the field electrode (5 to 10) are disposed concentrically to their center line (3) and in spaced relationship (11) relative to one another.

3. An electrode arrangement according to claims 1 and 2, characterized in that the field electrode (5 to 10) exhibits a bead-shaped edge (12).

4. An electrode arrangement according to claims 1 to 3, characterized in that the bead-shaped edge (12) of the field electrode (5 to 10) is arranged, in spaced relationship (18), opposite the free ends (16) of the corona discharge electrodes (13, 14).

5. An electrode arrangement according to claims 1 to 4, characterized in that the corona discharge electrodes (13) extend unidirectionally to the center line (3) of the circular annulus electrode (2, 4) and the field electrode (5 to 8).

6. An electrode arrangement according to claims 1 to 5, characterized in that the corona discharge electrodes (13) are arranged on either side of the circular annulus electrode (2, 4).

7. An electrode arrangement according to claims 1 to 4, characterized in that the corona discharge electrodes (14) extend radially from the circular annulus electrode (2, 4).

8. An electrode arrangement according to claim 7, characterized in that the corona discharge electrodes (14) seated on the circular annulus electrode (2, 4) extend inwardly.

9. An electrode arrangement according to claims 1 to 8, characterized in that the field electrode (5) is formed as a circular annulus.

10. An electrode arrangement according to claims 1 to 8, characterized in that the field electrode (5) is formed as a circular plate.

11. An electrode arrangement according to claims 1 to 7, characterized in that the corona discharge electrodes (14) seated on the circular annulus electrode (2, 4) extend outwardly, and the field electrode, formed as a cylinder or cylinder jacket (9, 10), respectively, extends at a space (18) from the free ends (16) of the corona discharge electrodes (14).

12. An electrode arrangement according to claims 1 to 11, characterized in that the circular annulus electrode (2, 4) is fastened by means of a mounting (19) to a stand or wall (24).

13. An electrode arrangement according to claims 1 to 12, characterized in that the field electrode (5 to 10) is fastened to a concentric mounting (20).

14. An electrode arrangement according to claims 1 to 13, characterized in that the circular annulus electrodes (2, 4) and the field electrodes (5 to 10) are detachably connected to their mountings (19, 20).

15. An electrode arrangement according to claims 12 to 14, characterized in that the mountings are insulated mountings.

16. An electrode arrangement according to claims 1 to 15, characterized in that a plurality of circular annulus electrodes (2, 4) and field electrodes (2 to 8) are successively fastened to respectively one insulating mounting (29, 30, 31, 32; 34, 35) and, by conducting connection lines (27, 28) are respectively connected to the same voltage.

17. An electrode arrangement according to claim 16, characterized in that the mounting for the plurality of circular annulus electrodes (2, 4) includes braces (30) connected thereto through insulators (29) and aligned unidirectionally with the center line (3), and correspondingly formed rails (32) along which the braces (30) are displaceable along the center line (3).

18. An electrode arrangement according to claim 17, characterized in that the rails (31) are seated at the inner side (33) of a tube (32).

19. An electrode arrangement according to claims 1 to 18, characterized in that a plurality of field electrodes (5 to 8), through their concentric mounting (34, 39), are successively fastened on a support tube (34) which, along the center line (3), is displaceably located on a support (35).

20. An electrode arrangement according to claim 19, characterized in that the support (35) is of a star-shaped cross-section.

21. An electrode arrangement according to claims 1 to 20, characterized in that the circular annulus electrode (4) is configured as a tube.

22. An electrode arrangement according to claims 1 to 21, characterized in that the field electrode is designed as a tube (7), as a can (8), as a hollow cylinder (10) and as a rod (5a), respectively.

23. An electrode arrangement according to claim 22, characterized in that the wall of the field electrode (7, 8, 10) exhibits a perforation (37) and is provided with apertures (36) or suction nozzles (38), respectively, and that the field electrode can be connected to an evacuation arrangement.

24. An electrode arrangement according to claim 23, characterized in that the radial mounting for the field electrodes (7, 8) includes hollow spokes (39) connected to respectively one corresponding suction nozzle (40) formed in the field electrode (7, 8) and the support tube (34) which, in turn, can be connected to the evacuation arrangement.

25. An electrode arrangement according to claims 1 to 24, characterized in that the corona discharge electrodes (13, 14) are configured as ionization needles.

## Revendications

1. L'ensemble d'électrode pour des effluves électriques, préférablement pour l'usage dans des outils à purification d'air et d'autres gazes et/ou pour le conditionnement d'air, comportant une électrode annulaire reliée à un pôle d'une source à haute tension, dès s'étendent des électrodes d'effluve électrique, caractérisé par une électrode de champ (5, 6, 7, 8, 9, 10) également annulaire et reliée à l'autre pôle (26) de la source de tension constante, l'électrode de champ étant disposée concentriquement aux électrodes d'effluve électrique (13, 14) ainsi que les lignes de champ se forment symétriquement aux lignes radiales entre les pointes des électrodes d'effluve électrique (13, 14) et la ligne centrale (3) des électrodes de champ (5, 6, 7, 8, 9, 10).

2. L'ensemble d'électrode selon la revendication 1, caractérisé en ce que l'électrode annulaire (2, 4) et l'électrode de champ (5 à 10) sont disposées concentriquement à leur ligne centrale (3) et à l'espace (11) relatif l'une à l'autre.

3. L'ensemble d'électrode selon les revendications 1 et 2, caractérisé en ce que l'électrode de champ (5 à 10) est prévue d'un bord (12) sous forme bourrelet.

4. L'ensemble d'électrode selon les revendications 1 à 3, caractérisé en ce que le bord (12) de l'électrode de champ (5 à 10) sous forme bourrelet se trouve en espace (18) vis à vis les extrémités (16) libres des électrodes d'effluve électrique (13, 14).

5. L'ensemble d'électrode selon les revendications 1 à 4, caractérisé en ce que les électrodes d'effluve électrique (13) s'étendent de sens unidirectionel à la ligne centrale (3) de l'électrode annulaire (2, 4) et de l'électrode de champ (5 à 8).

6. L'ensemble d'électrode selon des revendications 1 à 5, caractérisé en ce que les électrodes d'effluve électrique (13) s'étendent de deux côtés de l'électrode annulaire (2, 4).

7. L'ensemble d'électrode selon les revendications 1 à 4, caractérisé en ce que les électrodes d'effluve électrique (14) sont disposées radialement à l'électrode annulaire (2, 4).

8. L'ensemble d'électrode selon la revendication 7, caractérisé en ce que les électrodes d'effluve électrique (14) assises sur l'électrode annulaire (2, 4) s'étendent vers l'intérieur.

9. L'ensemble d'électrode selon les revendications 1 à 8, caractérisé en ce que l'électrode de champ (5) est sous forme d'anneau de cercle.

10. L'ensemble d'électrode selon les revendications 1 à 8, caractérisé en ce que l'électrode de champ (5) est sous forme de plaque circulaire.

11. L'ensemble d'électrode selon les revendications 1 à 7, caractérisé en ce que les électrodes d'effluve électrique (14) assises sur l'électrode annulaire (2, 4) s'étendent vers l'extérieur et l'électrode de champ est sous forme de cylindre ou corps de cylindre (9, 10) disposé en espace (18) des extrémités (16) libres des électrodes d'effluve électrique (14).

12. L'ensemble d'électrode selon les revendications 1 à 11, caractérisé en ce que l'électrode annulaire (2, 4) est fixée par l'intermédiaire des attaches (19) à une monture ou une paroi (24).

13. L'ensemble d'électrode selon les revendications 1 à 12, caractérisé en ce que l'électrode de champ (5 à 10) est fixée aux attaches (20) concentriques.

14. L'ensemble d'électrode selon les revendications 1 à 13, caractérisé en ce que les électrodes annulaire (2, 4) et les électrodes de champ (5 à 10) sont reliées de manière détachable à leurs attaches (19, 20).

15. L'ensemble d'électrode selon les revendications 12 à 14, caractérisé en ce que les attaches sont des attaches isolantes.

16. L'ensemble d'électrode selon les revendications 1 à 15, caractérisé en ce que plusieurs électrodes annulaires (2, 4) et électrodes de champ (2 à 8) sont fixées l'une derrière l'autre sur chacune attache isolante (29, 30, 31, 32; 34, 35) et par l'intermédiaire des communications conducteuses (27, 28), l'un avec l'autre, sont placées à la même tension.

17. L'ensemble d'électrode selon la revendication 16, caractérisé en ce que l'attache pour plusieurs électrodes annulaires (2, 4) comporte des porteurs (30) reliés aux desdits électrodes par l'intermédiaire des isolatoirs (29) et unidirectionellement alignés à la ligne centrale (3), ainsi que des rails (32) d'une configuration correspondante le long desquels les porteurs (30) sont déplaçable vers la ligne centrale (3).

18. L'ensemble d'électrode selon la revendication 17, caractérisé en ce que les rails (31) sont assis à côté intérieur (33) d'un tube (32).

19. L'ensemble d'électrode selon les revendications 1 à 18, caractérisé en ce que plusieurs électrodes de champ (5 à 8), par leur attache (34, 39) concentrique sont fixées l'une derrière l'autre sur un tube (34) assis de manière déplaçable vers la ligne centrale (3) sur un porteur (35).

20. L'ensemble d'électrode selon la revendication 19, caractérisé en ce que le porteur (35) est d'une section transversale en étoile.

21. L'ensemble d'électrode selon les revendications 1 à 20, caractérisé en ce que l'électrode annulaire (4) est sous forme d'un tube.

22. L'ensemble d'électrode selon les revendications 1 à 21, caractérisé en ce que l'électrode de champ est sous forme de tube (7), de boîte (8), de cylindre creux (10) respectivement de barre (5a).

23. L'ensemble d'électrode selon la revendication 22, caractérisé en ce que la paroi de l'électrode de champ (7, 8, 10) est prévue d'une perforation (37) respectivement des ouvertures (36) ou des tuyères d'aspiration (38), et que l'électrode de champ est reliable à un dispositif du vide.

24. L'ensemble d'électrode selon la revendication 23, caractérisé en ce que l'attache radiale pour les électrodes de champ (7, 8) comporte des rayons creux (39) reliés à chaque ouverture d'aspiration (40) correspondante dans l'électrode de champ (7, 8) et au tube-porteur (34) de sa part reliable au dispositif du vide.

25. L'ensemble d'électrode selon les revendications 1 à 24, caractérisé en ce que les électrodes d'effluve électrique (13, 14) sont sous forme d'aiguilles d'ionisation.

Fig.1

Fig.2

Fig.3

Fig.4

Fig.5

Fig. 6

Fig.7